# EUROPEAN PATENT APPLICATION

(11) **EP 2 259 510 A1**
(43) Date of publication of application: **08.12.2010**
(21) Application number: 09162107.8
(22) Date of filing: 05.06.2009
(51) Int. Cl.: H04L 12/56

(54) **A method for establishing a data session between a first endpoint and a second endpoint**

(71) Applicant: Net Transmit & Receive, S.L., 08019 Barcelona (ES)
(72) Inventor: Casanovas, Davil Llort, Barcelona (ES); Prieto, Joan Pons, Barcelona (ES)
(74) Representative: O'Connell, David Christopher

(57) **Abstract**

A method for establishing a data transfer session between a first endpoint and a second endpoint is described. In the first endpoint, a connection to the second endpoint is requested from a management node. Information including the identity of a plurality of repeaters each offering a possible route between the first and second endpoints is received from the management node. A repeater is selected and information is transmitted to the second endpoint by sending the information to the selected repeater. The method is repeated at the second endpoint.

## Description

### Field of the invention

The present invention relates to a method for establishing a data transfer session between a first endpoint and a second endpoint.

### Background of the invention

Communication protocols used over an unreliable network are well understood. By far the best known is Transmission Control Protocol over Internet Protocol (TCP/IP), which provides a reliable byte stream between two end points on a network where individual packets sent over that network might take different routes, fail to arrive or arrive in the wrong order. The first version of TCP was formally documented in RFC 675, Dec 1974, and the version in use now was documented in RFC 791, Sept 1981.

Although TCP/IP is useful, the route taken by the packets carrying the traffic depends on the routers that make up the network. Neither of the end points have any control on how the packets are routed and hence the path taken. This is of course intentional, making the internet a highly resilient mechanism with multiple paths within it, responding to changes in demand as they happen.

These dynamic modifications to the network tend to be made within autonomous networks - blocks owned and operated by a single organisation. There are several ways to do this - one of the most common is Open Shortest Path First (OSPF) as described in RFC 2328, April 1998.

An Internet Service Provider (ISP) owning an autonomous block may have multiple routes to other ISPs and their autonomous blocks, commonly by having several links to internet peering establishments. A single router can be programmed to ensure that all such routes are used equally, or that the queues associated with each route are kept equal, or that one route is used in preference to another which is only available as backup. Again, the mechanism for routing between autonomous blocks is well understood and is commonly handled by the Border Gateway Protocol (BGP) described fully in RFC 4271, January 2006.

US 2008/0225715 describes a mechanism whereby a proxy or intermediate appliance can distribute congestion information to other network devices and induce their rates of transmission.

US Patent 7,299,291 describes how the best performing media server from a number of potential servers can be selected by a client depending on how well data from each server is delivered according to a number of metrics.

These mechanisms work well in ensuring that congestion is minimised, but for certain applications the latency of the round trip is vital to how well the application performs. The latency is measured between the two end points, where commonly the packet of data travels from the first endpoint to the local ISP, then from that ISP to perhaps an international Tier1 ISP, from there to the ISP of the destination endpoint and then to the endpoint itself. The routers that deliver the packets know nothing of the relationship between packets that may be requests and replies, and the associated latency of that transaction.

As the data flowing through these networks changes, then the latency can change dramatically. Any static decision to choose a certain route is unlikely to be useful, so there is then a requirement for a mechanism that dynamically provides the best service, measured by the least latency, between two endpoints. Furthermore, this mechanism should be available between any two endpoints, even when they are behind firewalls.

### Summary of the invention

According to a first aspect of the present invention, there is provided a method for establishing a data transfer session between a first endpoint and a second endpoint, the method comprising: in the first endpoint, requesting from a management node a connection to the second endpoint; receiving information from the management node including the identity of a plurality of repeaters each offering a possible route between the first and second endpoints; selecting one of the repeaters; and transmitting information to the second endpoint by sending the information to the selected repeater.

The step of receiving information from the management node may further comprise receiving a unique identifier for the connection; and the step of transmitting information to the second endpoint may further comprise sending the unique identifier to the selected repeater.

The step of selecting may comprise selecting one of the repeaters on the basis of a first repeater identifier included in a message received from the second endpoint.

The transmitted information may include a second repeater identifier allowing the second endpoint to select a repeater offering a possible route between the first and second endpoints.

The second repeater identifier included in the message to the second endpoint may include the identity of the repeater offering the lowest latency route from the second endpoint.

The step of selecting may comprise: sending a message by means of a plurality of repeaters; receiving corresponding reply messages by means of the same plurality of repeaters; and selecting one of the repeaters based on a quality of service received by said messages.

The step of selecting may comprise: sending a message by means of a plurality of repeaters; receiving corresponding reply messages by means of the same plurality of repeaters; and selecting one of said repeaters on the basis of available bandwidth.

The step of selecting one of the repeaters comprises selecting one of the repeaters offering a route having a lowest round-trip latency associated therewith during the data transfer session.

The method may further comprise transmitting the unique identifier to the selected repeater to allow a connection to the second endpoint to be established, and may thereafter omit the unique identifier from at least one transmission.

The selected repeater may be reselected periodically. Alternatively, the selected repeater may be reselected after a certain percentage of packets of data have been transmitted.

The selected repeater may be reselected when the latency, bandwidth or quality of service changes.

According to a second aspect of the present invention, there is provided a method for establishing a data session between a first endpoint and a second endpoint, the method comprising: in the second endpoint, receiving information from the management node including the identity of a plurality of repeaters each offering a possible route between the first and second endpoints; receiving data from the first endpoint through at least one repeater; selecting one of the repeaters; and transmitting information to the first endpoint by sending the information to the selected repeater.

The step of receiving information from the management node may further comprise receiving a unique identifier for the connection; and the step of transmitting information to the first endpoint may further comprise sending the unique identifier to the selected repeater.

The method may further comprise the step of: sending a reply message to every repeater from which data is received.

The step of selecting may comprise selecting one of the repeaters on the basis of a second repeater identifier included in a message received from the first endpoint.

The transmitted information may include a first repeater identifier allowing the first endpoint to select a repeater offering a possible route between the first and second endpoints.

The first repeater identifier included in the message to the first endpoint may include the identity of the repeater offering the lowest latency route from the first endpoint.

The step of selecting may comprise: sending a message by means of a plurality of repeaters; receiving corresponding reply messages by means of the same plurality of repeaters; and selecting one of the repeaters based on a quality of service received by said messages.

The step of selecting may comprise: sending a message by means of a plurality of repeaters; receiving corresponding reply messages by means of the same plurality of repeaters; and selecting one of said repeaters on the basis of available bandwidth.

The step of selecting one of the repeaters comprises selecting one of the repeaters offering a route having a lowest round-trip latency associated therewith during the data transfer session.

The method may further comprise transmitting the unique identifier to the selected repeater to allow a connection to the second endpoint to be established, and may thereafter omit the unique identifier from at least one transmission.

The selected repeater may be reselected periodically. Alternatively, the selected repeater may be reselected after a certain percentage of packets of data have been transmitted.

The selected repeater may be reselected when the latency, bandwidth or quality of service changes.

According to a third aspect of the present invention, there is provided a method for establishing a data transfer session between a first endpoint and a second endpoint, the method comprising: in the first endpoint, requesting from a management node a connection to the second endpoint; receiving information from the management node including the identity of a plurality of repeaters each offering a possible route between the first and second endpoints; selecting one of the repeaters; transmitting information to the second endpoint by sending the information to the selected repeater; in the second endpoint, receiving information from the management node including the identity of a plurality of repeaters each offering a possible route between the first and second endpoints; receiving data from the first endpoint; selecting one of the repeaters; and transmitting information to the first endpoint by sending the information to the selected repeater.

The step of receiving information from the management node may further comprise receiving a unique identifier for the connection; and the step of transmitting information to the second endpoint may further comprise sending the unique identifier to the selected repeater.

The step of selecting in the first endpoint may comprise selecting one of the repeaters on the basis of a first repeater identifier included in a message received from the second endpoint.

The transmitted information to the second endpoint may include a second repeater identifier allowing the second endpoint to select a repeater offering a possible route between the first and second endpoints.

The second repeater identifier included in the message to the second endpoint may include the identity of the repeater offering the lowest latency route from the second endpoint.

The step of selecting in the first endpoint or in the second endpoint may comprise: sending a message by means of a plurality of repeaters; receiving corresponding reply messages by means of the same plurality of repeaters; and selecting one of the repeaters based on a quality of service received by said messages.

The step of selecting in the first endpoint or in the second endpoint may comprise: sending a message by means of a plurality of repeaters; receiving corresponding reply messages by means of the same plurality of repeaters; and selecting one of said repeaters on the basis of available bandwidth.

The step of selecting one of the repeaters comprises selecting one of the repeaters offering a route having a lowest round-trip latency associated therewith during the data transfer session.

The method may further comprise transmitting the unique identifier to the selected repeater to allow a connection to the second endpoint to be established, and may thereafter omit the unique identifier from at least one transmission.

The selected repeater may be reselected periodically in the first endpoint or in the second endpoint. Alternatively, the selected repeater may be reselected after a certain percentage of packets of data have been transmitted.

The selected repeater may be reselected when the latency, bandwidth or quality of service changes.

The step of receiving information from the management node may further comprise receiving a unique identifier for the connection; and the step of transmitting information to the first endpoint may further comprise sending the unique identifier to the selected repeater.

The method may further comprise the step of: sending a reply message to every repeater from which data is received.

The step of selecting in the second endpoint may comprise selecting one of the repeaters on the basis of a second repeater identifier included in a message received from the first endpoint.

The transmitted information to the first endpoint may include a first repeater identifier allowing the first endpoint to select a repeater offering a possible route between the first and second endpoints.

The first repeater identifier included in the message to the first endpoint may include the identity of the repeater offering the lowest latency route from the first endpoint.

According to further aspects of the invention, there are provided computer network nodes configured to operate in accordance with the methods of the invention.

### Brief description of the drawings

For a better understanding of the invention, and to show more clearly how it may be carried into effect, reference will now be made, by way of example only, to the accompanying drawings in which:
Figure 1 shows a system for establishing a data transfer session between a first endpoint and a second endpoint in accordance with the invention;
Figure 2 shows a flow chart of the method steps for establishing a data transfer session between a first endpoint and a second endpoint in accordance with the invention;
Figure 3 shows an application of the system for establishing a data transfer session between a first endpoint and a second endpoint in accordance with an embodiment the invention;
Figure 4 shows a flow chart of the method steps in accordance with the embodiment of the invention shown in Figure 3;
Figure 5 is a flow chart illustrating a further method in accordance with the invention.

### Detailed description

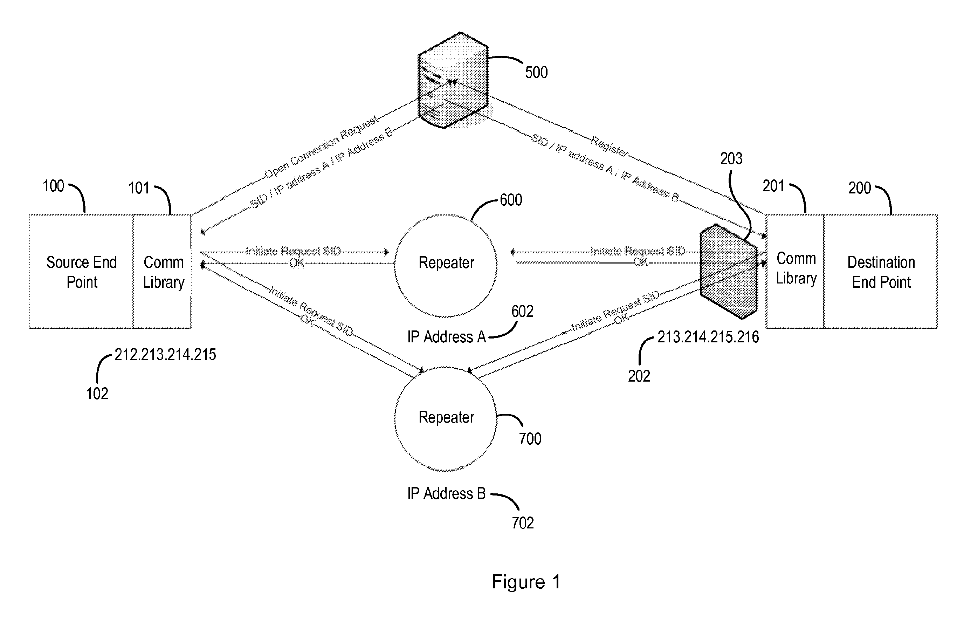

Figure 1 shows a system for establishing a data transfer session between a first endpoint 100 and a second endpoint 200 according to one embodiment of the invention. The system comprises a plurality of repeater computers 600, 700 located at different locations on the internet and connected by a wide range of different Internet Service Providers (ISPs). In addition, one or more management nodes (e.g. communication servers) 500 are located on the internet. These communication servers 500 know the IP addresses of all the repeater computers 600, 700, and are able to authenticate the first and second endpoints that wish to use the service.

The first endpoint 100 and the second endpoint 200 each have a respective common communication library. When the first endpoint (a source endpoint) 100, having an IP address 102, wishes to communicate with the second endpoint (a destination endpoint) 200, the source endpoint 100 uses a communication library 101 running on the source endpoint 100. This communication library 101 supports communication of data to the destination endpoint 200, identified by an identity. This identity may be a public IP address, but this is of little use when the destination is behind a firewall 203 that is connected to an ISP with a dynamic IP address 202. More commonly, each endpoint 100, 200 is given a suitable unique identifier (UID) when it is registered with the communication server 500.

The destination endpoint 200 runs a communication library 201, which is the same as the library 101 running on the source endpoint 100.

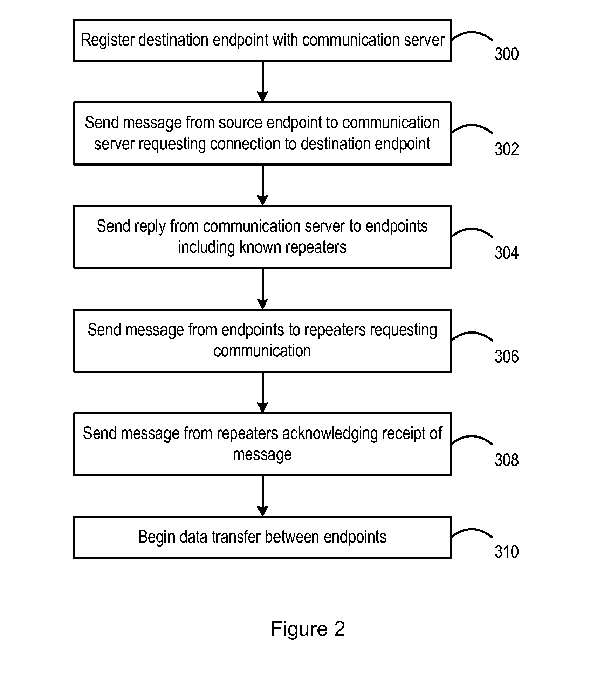

The establishment of a data transfer session is illustrated by means of a flow chart in Figure 2. When the library 201 first starts up it sends a message by TCP/IP or by User Datagram Protocol (UDP) to the communication server 500, registering itself by quoting its own UID and providing perhaps some authentication (step 300). The server 500 saves this information in a database 501 along with the current public IP address 202 of the destination endpoint 200. The registration process is repeated every few minutes.

The first step in the communication process is for the library 101 running on the source endpoint 100 to send a message to the communication server 500 requesting a connection to the destination endpoint 200 identified by its UID (step 302). The communication server 500 determines if the destination endpoint 200 identified by that UID is registered, and if so it allocates a unique session identifier (SID) for this communication session. The communication server 500 then sends a reply to the source endpoint 100 that includes the SID and the IP addresses 602, 702 of all the currently known repeater computers 600, 700 (step 304). The currently known repeater computers 600, 700 each offer a possible route between the first and second endpoints 100, 200. The reply uses the public IP address 102 of the source endpoint 100 as the reply address of the UDP or TCP/IP protocol.

A further enhancement might be to reply with a suitable subset of the repeater computers 600, 700, depending on various data available, such as the load on the repeaters 600, 700, their geographical location with respect to the two endpoints 100, 200, and so on.

A similar message is sent by the communication server 500 to the destination endpoint 200, using this time the stored public IP address 202 from the latest registration (step 304).

This mechanism is not dissimilar from that used by the Session Initiation Protocol whereby two devices need not know the IP address of the other, just a name and place where the other device has registered.

Both endpoints 100, 200 then attempt to open a communication channel to all of the repeater computers 600, 700 using either UDP or TCP. The repeaters 600, 700 are initially sent a message that includes the SID asking for communication to take place (step 306). When a repeater receives one of these messages it looks to see if the SID is already held in memory. If not, then the IP address of the sender is recorded and the SID stored. When the second endpoint 200 passes the SID then the SID is used to locate the IP address 102 of the first endpoint 100 and the IP address 202 of the second endpoint 200 is stored alongside it. The SID can then be discarded once it has been used to verify the link between the IP address 102 of the first endpoint 100 and the IP address 202 of the second endpoint 200. Each repeater then sends to both endpoints 100, 200 an acknowledgement (step 308) and data transfer begins (step 310).

In summary, the destination endpoint 200 initialises communication library 201, which contacts communication server 500 through a known IP address or DNS name and registers the unique identity (UID) of the destination endpoint 200 (step 300). The source endpoint 100 uses communication library 101 to send an "Open Connection" request to the communication server 500 through a known IP address or DNS name quoting the UID of the destination endpoint 200 as the endpoint to be connected (step 302). The communication server 500 sends both endpoints 100 and 200 a "Make Connection" request which includes a session identifier (SID) and the IP addresses 602, 702 of a number of repeaters 600, 700 (step 304). Both endpoints 100, 200 send all the repeaters 600, 700 an "Initiate" request quoting the SID (step 306). When one of the repeaters has received requests from both endpoints 100, 200, the repeater sends an acknowledgement back to each endpoint 100, 200 (step 308) and data transfer begins (step 310).

Subsequent messages need not contain the SID as the repeaters 600, 700 will have a record of the pairs of IP addresses to be connected, and data within these messages will be immediately transmitted back to the matching endpoint.

The communication library 101 on the source endpoint 100 is then used by an application to send data to the destination endpoint 200. Commonly, this will be a two-way data flow with data coming back. Every time data is to be transmitted by the library 101 it is sent to every repeater computer 600,700, along with a sequence number and a preferred IP address which is initially blank.

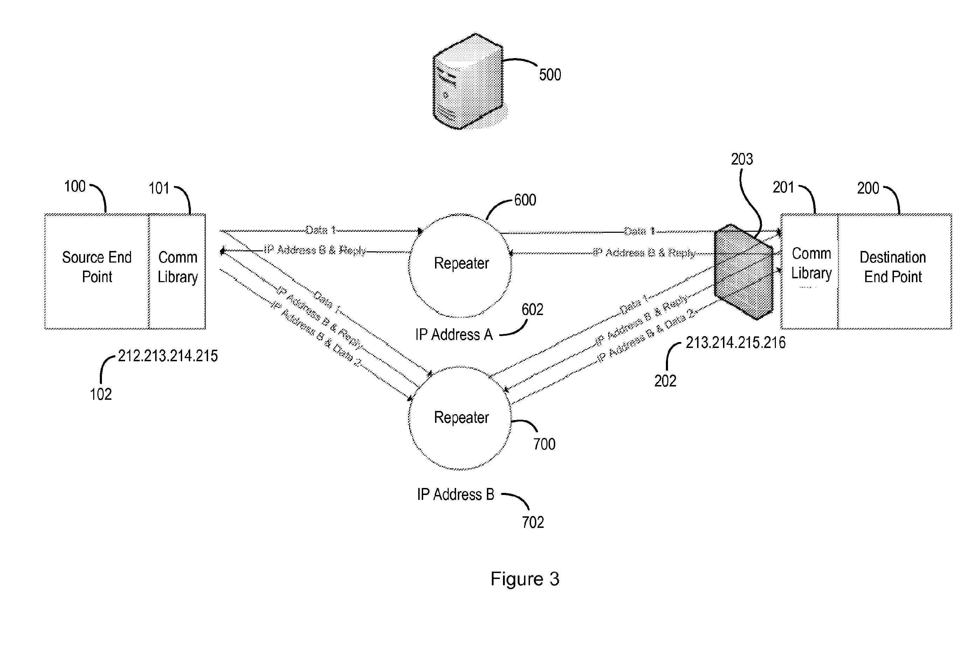

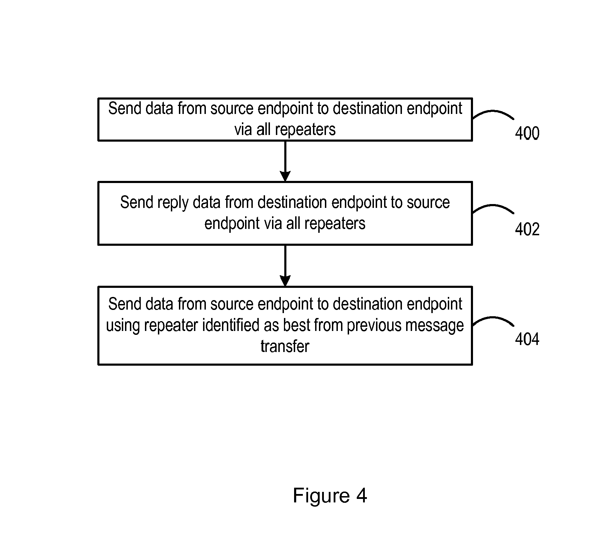

Figure 3 shows the system of Figure 1, establishing the data connection for sending data to the destination endpoint 200, as shown in the flow chart of Figure 4.

The source endpoint 100 sends data to the destination endpoint 200 via all repeaters 600, 700 that have sent acknowledgements (step 400). A preferred IP address, which is currently blank, and a sequence number are also sent with the data to the destination endpoint 200.

In the receiving part of the second endpoint library 201, the data will be received from one of the repeater 700 computers before it is received from the other repeater computers 600, this being the repeater that has provided the data with the minimal delay. Subsequent data with the same sequence number received from the other repeater computers 600 are discarded.

The transmitting part of the library 201 is then used at the destination endpoint 200, to send any reply data to the source endpoint 100 via all of the repeater computers 600, 700 (step 402). The sequence number is incremented and is also sent back, along with the IP address 702 of the repeater computer 700 that provided the data in the timeliest manner.

When the reply is received at the source endpoint 100, the receiving library 101 notes the IP address 702 of the repeater 700 that delivered the message first, and ignores messages with the same sequence number from other repeaters 600.

When the next transmission is made from the source endpoint 100, the data can be sent in a message to only the repeater 700 identified as the best by the destination endpoint 200, including with it information about the best repeater 700 to be used by the next reply from the destination endpoint 200 (step 404).

Incidentally, while this description assumes that the source endpoint 100 and the destination endpoint 200 will identify the same repeater 700 as being the best repeater for transferring data thereto, this will not necessarily be the case, and it is permissible for the two endpoints to identify different repeaters as their preferred repeaters.

In addition, as described above the destination endpoint 200 may identify the "best" repeater as being the repeater that delivered the message first from the source endpoint 100, and hence as being the repeater that offers the lowest latency route. Alternatively, the best repeater may be identified as being the repeater that provided the best quality of service to the message sent from the source endpoint 100. The "best" repeater may alternatively be identified based on available bandwidth.

In a similar fashion, when the next message reaches the destination endpoint 200, the destination endpoint 200 will have the identity of the optimal repeater to use for the reply and may elect to only use that repeater.

In this way, during data transfer, the communication libraries 101, 102 can dynamically change the route by which data is sent by reacting to changes in conditions in the internet.

To save bandwidth, the messages that are sent to all of the repeaters 600, 700 can contain just the sequence number but no data. In this way, dynamic changes to the network can be identified. For example, if an empty message arrives before one with data, then the route used will be changed on the next data exchange. If an empty message arrives and one with data does not arrive within a timeout period then it is clear that a message has been lost in transit and a request for a retransmission can be sent via the best or all of the repeaters 600, 700. Alternatively, the library 101, 102 can elect to send a certain percentage of messages to all repeaters to see if there is a better route, or to send messages to all repeaters after a defined time interval.

When the communication channel is closed down, the repeaters 600, 700 are all sent a close message that causes them to clear the IP pairs representing the endpoints 100, 200 from memory.

The above description allows for data to be sent via a certain repeater in one direction and a different repeater in the other direction.

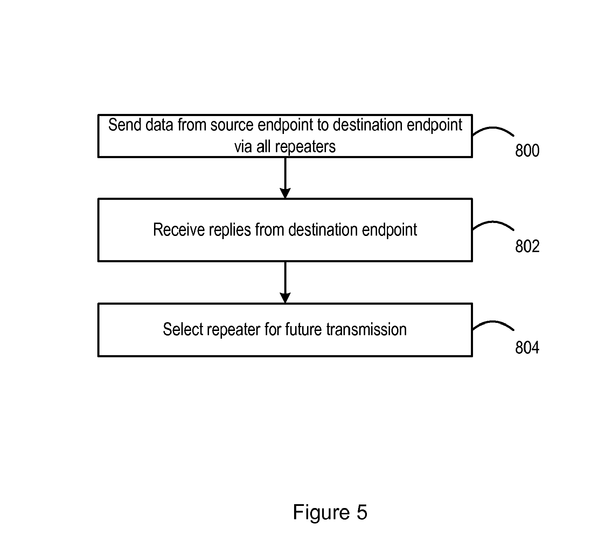

In an alternative embodiment, shown in Figure 5, there is no need to send the preferred IP address in the messages, but this assumes that a symmetric path will be the best.

In this alternative method, in step 800 the source endpoint 100 sends data for the destination endpoint 200 to all repeaters 600, 700 that have sent acknowledgements along with a sequence number. The data transmitted at this stage may form part of the desired transmission or might be trial data sent for the purposes of establishing the required connection. The destination endpoint 200 will receive the data from one repeater 700 before any others 600. If low latency is the criterion, this is the preferred repeater for transmission to the destination endpoint 200. Any data with the same sequence number received from other repeaters 600 is discarded.

In this embodiment of the invention, the destination endpoint 200 replies to each received data transmission by returning data through the same repeater. That is, when the destination endpoint 200 receives data via the repeater 600, it returns data through the repeater 600, and when it receives data via the repeater 700, it returns data through the repeater 700.

Subsequent replies containing data may be sent back with an incremented sequence number may be sent back only via the preferred repeater 700, in which case empty data packets with the same sequence number can also be sent to the source endpoint 100 via all or some of the other repeaters 600, 700.

In step 802, the source endpoint 100 receives the reply transmissions from the destination endpoint 200 via the various repeaters, and it will receive the reply from one of the repeaters 700 before any others 600. Assuming that the destination endpoint applies a constant delay between receiving data through a repeater and returning its reply via the same repeater, then the first reply received by the source endpoint 100 indicates the repeater that lies in the forward and return path that has the lowest total latency.

This repeater can then be selected in step 804 for use in future data transmissions in the same session.

In addition, if the destination endpoint returns data only in its preferred repeater, and returns empty data packets via the other repeaters, this can be used to derive additional information. Specifically, if the first transmission received by the source endpoint in step 802 contains data, then this indicates that this repeater is now the preferred route for transmission, as it is the lowest latency route from the source endpoint 100 to the destination endpoint 200, and is also the lowest latency symmetric route there and back (i.e. the route having the lowest round-trip latency). On the other hand, if the first reply received by the source endpoint 100 contains empty data then this indicates that the lowest latency round trip is a split route. That is, the route having the lowest round-trip latency is not the lowest latency route from the source endpoint to the destination endpoint, implying that a lower latency route could be achieved by transmitting via different repeaters in the two directions, that is, using a split route.

If a split route is to be used than, as above, all packets with the same sequence number are discarded except for the first that contains data. When the packet that contains data arrives then that repeater may be used as the preferred route to the destination end point.

The above sequence of events may repeat a number of times, as there is no mechanism for agreeing the best route for both ends. Eventually the library 101, 102 can elect to choose just one and to resend data packets though all or some of the repeaters 600, 700 at a later time as described earlier. The repeater which is selected for data transfer may be reselected periodically or, alternatively, may be reselected after a certain percentage of packets of data have been transmitted. The repeater is reselected when a change occurs, for example, in the latency, bandwidth or quality of service.

Although embodiments of the present invention have been illustrated in the accompanying drawings and described in the foregoing detailed description, it will be understood that the invention is not limited to the embodiments disclosed, but is capable of numerous modifications without departing from the scope of the invention as set out in the following claims.

## Claims

1. A method for establishing a data transfer session between a first endpoint and a second endpoint, the method comprising:
in the first endpoint, requesting from a management node a connection to the second endpoint;
receiving information from the management node including the identity of a plurality of repeaters each offering a possible route between the first and second endpoints;
selecting one of said repeaters; and
transmitting information to the second endpoint by sending the information to the selected repeater.

2. A method according to claim 1, wherein the step of receiving information from the management node further comprises receiving a unique identifier for the connection; and wherein the step of transmitting information to the second endpoint further comprises sending the unique identifier to the selected repeater.

3. A method according to claim 1 or 2, wherein the step of selecting comprises selecting one of said repeaters on the basis of a first repeater identifier included in a message received from the second endpoint.

4. A method according to claim 1, 2 or 3, wherein the transmitted information includes a second repeater identifier allowing the second endpoint to select a repeater offering a possible route between the first and second endpoints.

5. A method according to claim 4, wherein the second repeater identifier included in the message to the second endpoint includes the identity of the repeater offering the lowest latency route from the second endpoint.

6. A method according to claim 1 or 2, wherein the step of selecting comprises:
sending a message by means of a plurality of repeaters;
receiving corresponding reply messages by means of the same plurality of repeaters; and
selecting one of said repeaters based on a quality of service received by said messages, or on the basis of available bandwidth, or on the basis of a lowest latency.

7. A method according to any of claims 2 to 6, comprising transmitting said unique identifier to the selected repeater to allow a connection to the second endpoint to be established, and thereafter omitting the unique identifier from at least one transmission.

8. A method for establishing a data session between a first endpoint and a second endpoint, the method comprising:
in the second endpoint, receiving information from the management node including the identity of a plurality of repeaters each offering a possible route between the first and second endpoints;
receiving data from the first endpoint through at least one repeater;
selecting one of said repeaters; and
transmitting information to the first endpoint by sending the information to the selected repeater.

9. A method according to claim 8, wherein the step of receiving information from the management node further comprises receiving a unique identifier for the connection; and wherein the step of transmitting information to the first endpoint further comprises sending the unique identifier to the selected repeater.

10. A method according to claim 8 or 9, further comprising the step of:
sending a reply message to every repeater from which data is received.

11. A method according to claim 8, 9 or 10, wherein the step of selecting comprises selecting one of said repeaters on the basis of a second repeater identifier included in a message received from the first endpoint.

12. A method according to claim 8, 9, 10 or 11, wherein the transmitted information includes a first repeater identifier allowing the first endpoint to select a repeater offering a possible route between the first and second endpoints.

13. A method according to claim 12, wherein the first repeater identifier included in the message to the first endpoint includes the identity of the repeater offering the lowest latency route from the first endpoint.

14. A method according to claim 8 or 9, wherein the step of selecting comprises:
sending a message by means of a plurality of repeaters;
receiving corresponding reply messages by means of the same plurality of repeaters; and
selecting one of said repeaters based on a quality of service received by said messages, or on the basis of available bandwidth, or on the basis of a lowest latency.

15. A method for establishing a data transfer session between a first endpoint and a second endpoint, the method comprising:
in the first endpoint, requesting from a management node a connection to the second endpoint;
receiving information from the management node including the identity of a plurality of repeaters each offering a possible route between the first and second endpoints;
selecting one of said repeaters;
transmitting information to the second endpoint by sending the information to the selected repeater;
in the second endpoint, receiving information from the management node including the identity of a plurality of repeaters each offering a possible route between the first and second endpoints;
receiving data from the first endpoint;
selecting one of said repeaters; and
transmitting information to the first endpoint by sending the information to the selected repeater.
